# EUROPEAN PATENT APPLICATION

(11) **EP 4 583 043 A1**
(43) Date of publication of application: **09.07.2025**
(21) Application number: 22957320.9
(22) Date of filing: 29.08.2022
(51) Int. Cl.: G06T 7/00

(54) **MACHINE LEARNING PROGRAM, MACHINE LEARNING METHOD, AND INFORMATION PROCESSING DEVICE**

(71) Applicant: FUJITSU LIMITED, Kawasaki-shi, Kanagawa 211-8588 (JP)
(72) Inventor: SUZUKI, Genta, Kawasaki-shi, Kanagawa 211-8588 (JP); FUJIMOTO, Junya, Kawasaki-shi, Kanagawa 211-8588 (JP)
(74) Representative: Hoffmann Eitle
(86) International application number: PCT/JP2022/032460
(87) International publication number: WO 2024/047716

(57) **Abstract**

An information processing apparatus obtains video in which work of a person is captured. The information processing apparatus receives a label indicating a work element of the person for each of time-series sections of the obtained video. The information processing apparatus executes training processing for training, based on the received label, a transition probability of a feature per unit time included in the work element. The training processing executed by the information processing apparatus changes, when the label of a specific type is assigned to the entire or a part of the work element, the transition probability of the feature in the section corresponding to the label based on the type of the assigned label.

## Description

### TECHNICAL FIELD

The present invention relates to a machine learning program and the like.

### BACKGROUND ART

The development of deep learning technology has made it possible to highly accurately recognize a posture from video of a person captured by an ordinary red-green-blue (RGB) camera, and various research and development have been performed to use this recognition information to estimate human behavior.

For example, there is an existing technique in which work of a person is captured by a camera, a plurality of time-series unit operations is specified based on the captured work video, and the specified sequence of the unit operations is checked against a model to estimate a plurality of work elements included in the work video.

Note that, since the sequence of the unit operations does not completely match every time and varies even in the case of the same work element, the existing technique utilizes a model in which the sequence of the unit operations in the work element is expressed by a stochastic transition (transition probability) between the unit operations. According to the existing technique, the transition probability of the model is trained based on training data defining a relationship between a pattern of the sequence of the unit operations actually observed from the work video and a label of the work element.

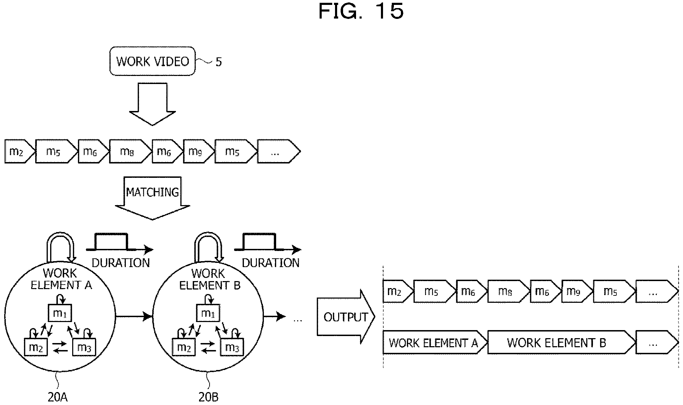

FIG. 15 is a diagram for explaining the existing technique. A device according to the existing technique will be referred to as a "conventional device" for convenience. The conventional device estimates unit operations included in work video in time series based on work video 5. In the example illustrated in FIG. 15, the unit operations are estimated in the order of unit operations m₂, m₅, m₆, m₈, m₆, m₉, m₅, and so on. For example, the conventional device estimates each of the unit operations with a model trained using unsupervised data.

The conventional device performs matching with a plurality of models corresponding to individual work elements while estimating the sequence of the unit operations as described above, and sequentially specifies the work element. In the example illustrated in FIG. 15, a model 20A corresponding to a work element A and a model 20B corresponding to a work element B are illustrated. The models 20A and 20B are hidden Markov models (HMMs).

The models 20A and 20B include a state node corresponding to the unit operation mₙ (n is a natural number). Each state node is coupled to a predetermined state node by an edge. A transition probability trained using training data is set to each edge. In FIG. 15, illustration of state nodes corresponding to unit operations of n = 4 or larger is omitted.

According to the existing technique, the state nodes of the models 20A and 20B are caused to transition based on a result of the estimation of the unit operations, and the work element corresponding to the sequence of the unit operations is sequentially specified based on the transition probability of the edge that has actually transitioned, various constraints, and the like. The various constraints include a work time of the work element, the order of the work element, and the like. In the example illustrated in FIG. 15, the sequence of the unit operations m₂, m₅, m₆ is specified as the work element A, and the sequence of the unit operations m₈, m₆, m₉, m₅ is specified as the work element B as a result of the matching.

### CITATION LIST

### PATENT DOCUMENT

Patent Document 1: Japanese Laid-open Patent Publication No. 2021-189892

### SUMMARY OF INVENTION

### TECHNICAL PROBLEM

However, the existing technique described above has a problem that the accuracy in identifying the work element may not be improved.

In one aspect, an object of the present invention is to provide a machine learning program, a machine learning method, and an information processing apparatus capable of improving accuracy in identifying a work element.

### SOLUTION TO PROBLEM

In a first option, a computer is caused to execute the following process. The computer obtains video in which work of a person is captured. The computer receives a label indicating a work element of the person for each of time-series sections of the obtained video. The computer executes training processing for training, based on the received label, a transition probability of a feature per unit time included in the work element. The training processing executed by the computer changes, when the label of a specific type is assigned to the entire or a part of the work element, the transition probability of the feature in the section corresponding to the label based on the type of the assigned label.

### ADVANTAGEOUS EFFECTS OF INVENTION

The accuracy in identifying the work of the person may be improved.

### BRIEF DESCRIPTION OF DRAWINGS

FIG. 1 is a diagram (1) for explaining a problem of an existing technique.
FIG. 2 is a diagram (2) for explaining a problem of an existing technique.
FIG. 3 is a diagram illustrating an example of a system according to the present embodiment.
FIG. 4 is a diagram (1) for explaining processing of an information processing apparatus according to the present embodiment.
FIG. 5 is a diagram (2) for explaining the processing of the information processing apparatus according to the present embodiment.
FIG. 6 is a diagram for explaining an effect of the information processing apparatus according to the present embodiment.
FIG. 7 is a functional block diagram illustrating a configuration of the information processing apparatus according to the present embodiment.
FIG. 8 is a diagram for explaining processing of an observation probability training unit.
FIG. 9 is a diagram for explaining exemplary processing of a transition probability training unit.
FIG. 10 is a diagram illustrating an exemplary machine learning model.
FIG. 11 is a flowchart (1) illustrating a processing procedure of the information processing apparatus according to the present embodiment.
FIG. 12 is a flowchart (2) illustrating the processing procedure of the information processing apparatus according to the present embodiment.
FIG. 13 is a flowchart (3) illustrating the processing procedure of the information processing apparatus according to the present embodiment.
FIG. 14 is a diagram illustrating an exemplary hardware configuration of a computer that implements functions similar to those of the information processing apparatus according to the embodiment.
FIG. 15 is a diagram for explaining an existing technique.

### DESCRIPTION OF EMBODIMENTS

Hereinafter, an embodiment of a machine learning program, a machine learning method, and an information processing apparatus disclosed in the present application will be described in detail with reference to the drawings. Note that the present invention is not limited by the embodiment.

### [Embodiment]

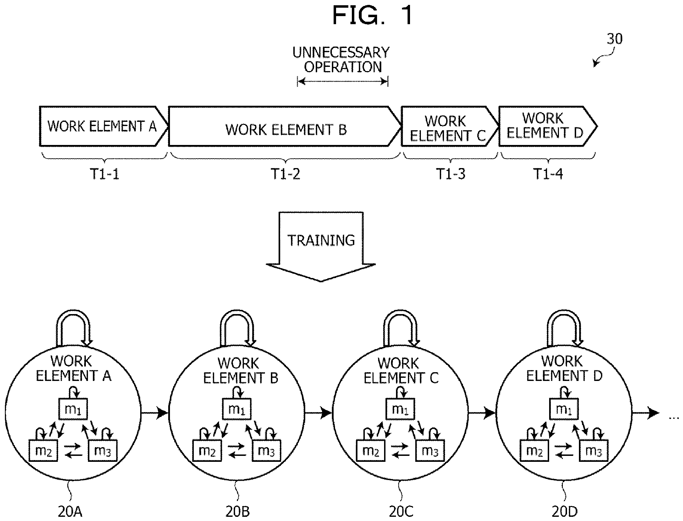

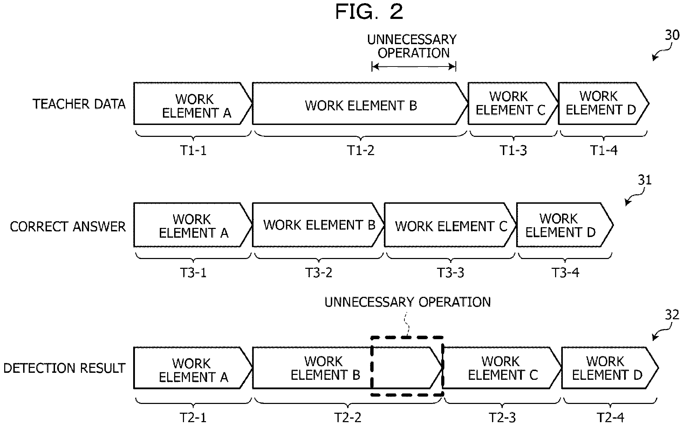

A problem of an existing technique will be specifically described before describing the present embodiment. FIGs. 1 and 2 are diagrams for explaining the problem of the existing technique. First, FIG. 1 will be described. For example, a conventional device carries out training (machine learning) of models 20A, 20B, 20C, and 20D of respective work elements using training data 30. The training data 30 includes a sequence of a plurality of unit operations corresponding to a work element A, a sequence of a plurality of unit operations corresponding to a work element B, a sequence of a plurality of unit operations corresponding to a work element C, and a sequence of a plurality of unit operations corresponding to a work element D. In the present embodiment, "carrying out training of a model" based on training data will be referred to as "training a model" as appropriate.

Among the time-series unit operations included in the work element A, a time from the first unit operation to the last unit operation is set as a section T1-1. Among the time-series unit operations included in the work element B, a time from the first unit operation to the last unit operation is set as a section T1-2. Among the time-series unit operations included in the work element C, a time from the first unit operation to the last unit operation is set as a section T1-3. Among the time-series unit operations included in the work element D, a time from the first unit operation to the last unit operation is set as a section T1-4.

The conventional device trains a transition probability of the model 20A of the work element A using the sequence of the plurality of unit operations corresponding to the work element A of the training data 30. The conventional device trains a transition probability of the model 20B of the work element B using the sequence of the plurality of unit operations corresponding to the work element B of the training data 30. A transition probability of the model 20C of the work element C is trained using the sequence of the plurality of unit operations corresponding to the work element C of the training data 30. A transition probability of the model 20D of the work element D is trained using the sequence of the plurality of unit operations corresponding to the work element D of the training data 30.

Here, in a process of performing the same work, a person who performs the work avoids unnecessary operations to improve the work. For example, even if the arrayed order of the unit operations included in each work element is correct at the time of training the model of each work element using the training data 30, unnecessary unit operations may be included in the work element due to the subsequent improvement. Here, descriptions of FIG. 2 will be given assuming that an unnecessary unit operation is included in the work element B of the training data 30.

Next, FIG. 2 will be described. The conventional device estimates the sequence of the unit operations included in the target work video, and checks a result of the estimation against the trained models 20A to 20D described with reference to FIG.1 to obtain a detection result 32. Meanwhile, a correct answer of the detection result of the work element included in the target work video is assumed to be a detection result 31.

The detection result 32 includes the work element A, the work element B, the work element C, and the work element D in order from the top. Among the time-series unit operations included in the work element A in the detection result 32, a time from the first unit operation to the last unit operation is set as a section T2-1. Among the time-series unit operations included in the work element B, a time from the first unit operation to the last unit operation is set as a section T2-2. Among the time-series unit operations included in the work element C, a time from the first unit operation to the last unit operation is set as a section T2-3. Among the time-series unit operations included in the work element D, a time from the first unit operation to the last unit operation is set as a section T2-4.

The detection result 31 as a correct answer includes the work element A, the work element B, the work element C, and the work element D in order from the top. Among the time-series unit operations included in the work element A in the detection result 31, a time from the first unit operation to the last unit operation is set as a section T3-1. Among the time-series unit operations included in the work element B, a time from the first unit operation to the last unit operation is set as a section T3-2. Among the time-series unit operations included in the work element C, a time from the first unit operation to the last unit operation is set as a section T3-3. Among the time-series unit operations included in the work element D, a time from the first unit operation to the last unit operation is set as a section T3-4.

For example, in the detection result 31 as a correct answer, an unnecessary operation is removed from the work element B due to the improvement, and the section T3-2 of the work element B in the detection result 31 is shorter than the section T1-2 of the work element B in the training data 30.

When the detection result 32 is compared with the detection result 31 as a correct answer, while the order of the work elements is the same, the length of the section of the work element B is largely different, whereby it may be said that the accuracy in identifying the work element is poor. This is because the model is trained using the work element B included in the training data 30, which is the work element B including an unnecessary operation, and thus the work element B in the detection result 32 also includes the unnecessary operation.

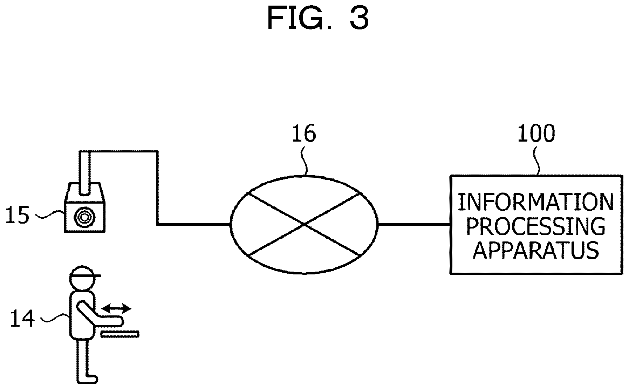

Next, an exemplary configuration of a system according to the present embodiment will be described. FIG. 3 is a diagram illustrating an example of the system according to the present embodiment. As illustrated in FIG. 3, this system includes a camera 15 and an information processing apparatus 100. The camera 15 and the information processing apparatus 100 are coupled to each other via a network 16.

Examples of the camera 15 include an RGB camera. The camera 15 captures video of a worker 14 working in a factory or the like, and transmits data of the captured video to the information processing apparatus 100. In the following descriptions, the data of the video captured by the camera 15 will be referred to as "work video data". The work video data includes time-series frames (still images).

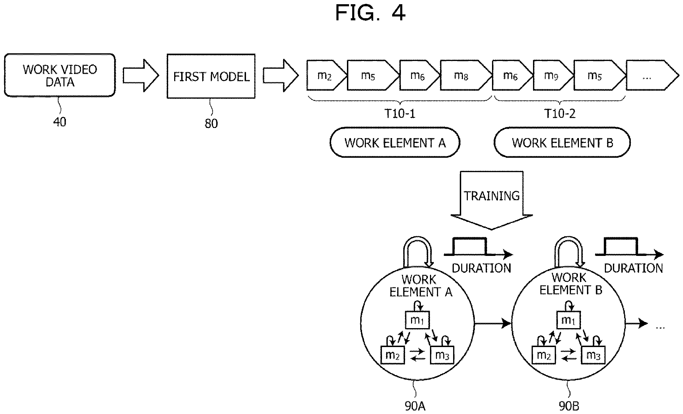

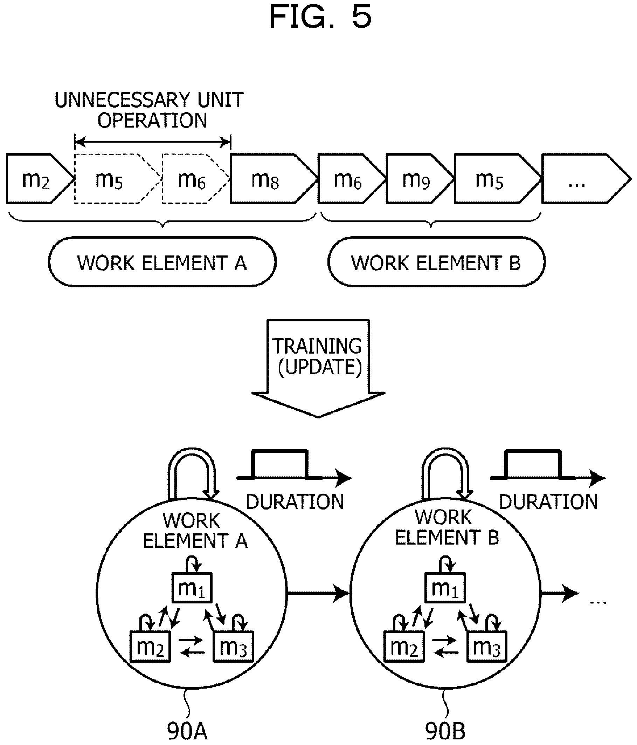

Next, processing of the information processing apparatus 100 will be described. FIGs. 4 and 5 are diagrams for explaining the processing of the information processing apparatus 100 according to the present embodiment. First, FIG. 4 will be described. The information processing apparatus 100 performs the following process based on work video data 40. The work video data 40 is data obtained by capturing video of a person working in a factory or the like with an RGB camera, and includes time-series frames (still images). The information processing apparatus 100 calculates time-series feature vectors for each predetermined window width based on the work video data 40.

The information processing apparatus 100 inputs the time-series feature vectors to a first model 80, thereby estimating time-series unit operations. The first model 80 is a model that estimates a unit operation from a feature vector, and is assumed to be trained in advance using unsupervised data. Examples of the unit operation include "raising an arm", "lowering an arm", "stretching an arm forward", and the like. The unit operation corresponds to a "feature".

In the example illustrated in FIG. 4, the first model 80 sequentially outputs unit operations m₂, m₅, m₆, m₈, m₆, m₉, m₅, and so on when time-series feature vectors are input.

In a training phase for training a second model, a label for identifying a work element of the person is set in the work video data 40 for each time-series section. For example, it is assumed that a label "work element A" is set in a section T10-1 and a label "work element B" is set in a section T10-2.

When the unit operations estimated from the individual feature vectors corresponding to the section T10-1 of the work video data 40 are assumed to be "unit operations m₂, m₅, m₆, and m₈", the information processing apparatus 100 associates the sequence of the unit operations m₂, m₅, m₆, and m₈ with the label "work element A".

When the unit operations estimated from the individual feature vectors corresponding to the section T10-2 of the work video data 40 are assumed to be "unit operations m₆, m₉, and m₅", the information processing apparatus 100 associates the sequence of the unit operations m₆, m₉, and m₅ with the label "work element B".

The information processing apparatus 100 includes a plurality of the second models for identifying individual work elements. FIG. 4 illustrates, as an example, a second model 90A corresponding to the work element A, and a second model 90B corresponding to the work element B. The second models 90A and 90B include a state node corresponding to the unit operation mₙ (n is a natural number). Each state node is coupled to a predetermined state node by an edge. An initial value of the transition probability is set to each edge. In FIG. 4, illustration of state nodes corresponding to unit operations of n = 4 or larger is omitted.

The information processing apparatus 100 trains the transition probability set in each edge of the second model 90A based on the sequence of the unit operations "m₂, m₅, m₆, and m₈" corresponding to the label "work element A".

The information processing apparatus 100 trains the transition probability set in each edge of the second model 90B based on the sequence of the unit operations "m₆, m₉, and m₅" corresponding to the label "work element B".

The information processing apparatus 100 repeatedly performs the processing described above also on other pieces of work video data to train the transition probability of each second model.

Here, the information processing apparatus 100 performs the processing illustrated in FIG. 4 to train the transition probability of each second model, and then performs processing illustrated in FIG. 5 when an instruction of a case where some unit operations in the sequence of the unit operations corresponding to the work element are unnecessary is received due to the work improvement.

The description proceeds to FIG. 5. When the information processing apparatus 100 receives designation of an unnecessary unit operation in a sequence of unit operations included in a certain work element, it sets a "waste label" to the designated unnecessary unit operation.

For example, the information processing apparatus 100 receives information indicating that the unit operations "m₅" and "m₆" are unnecessary unit operations in the sequence of the unit operations "m₂, m₅, m₆, and m₈" corresponding to the work element A, and sets the "waste label" to the unit operations "m₅" and "m₆". In the descriptions of FIG. 5, the unit operations "m₅" and "m₆" to which the waste label is set will be simply referred to as unit operations m₅ and m₆.

The information processing apparatus 100 reduces the transition probability of the edge from the state node of the unit operation m₂ to the state node of the unit operation m₅ and the transition probability of the edge from the state node of the unit operation m₅ to the state node of the unit operation m₆ among the edges of the respective state nodes of the second model 90A. Furthermore, the information processing apparatus 100 reduces the transition probability of the edge from the state node of the unit operation m₆ to the state node of the unit operation m₈.

Note that the information processing apparatus 100 may retrain the transition probability set to each edge of the second model 90A using the sequence of the unit operations "m₂ and m₈" obtained by removing the unit operations "m₅ and m₆" from the sequence of the unit operations "m₂, m₅, m₆, and m₈" corresponding to the work element A.

As described above, the information processing apparatus 100 according to the present embodiment may improve the accuracy in identifying the work element of the person by, when an unnecessary unit operation is designated in the sequence of the unit operations corresponding to the work element, updating the transition probability of the second model of the corresponding work element.

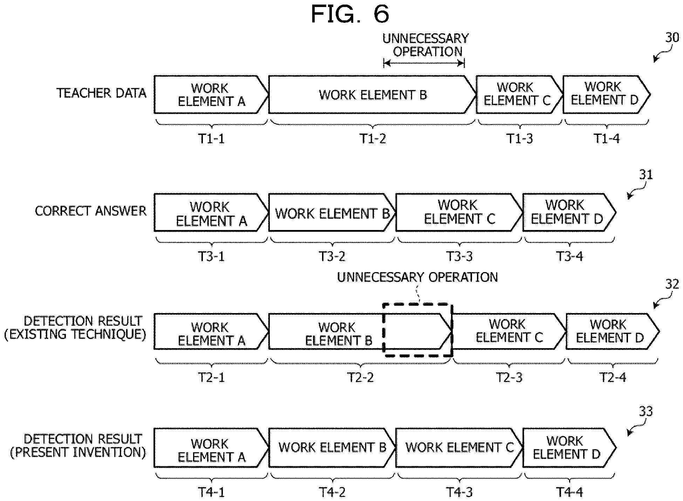

FIG. 6 is a diagram for explaining an effect of the information processing apparatus according to the present embodiment. For example, the information processing apparatus 100 according to the present embodiment trains the transition probability of the second models corresponding to the respective work elements based on the sequence of the unit operations included in the respective work elements A to D set in the training data 30. Furthermore, when the information processing apparatus 100 receives an instruction indicating that some or all of the unit operations included in the work element B are unnecessary, it updates the transition probability of the second model of the corresponding work element.

The information processing apparatus 100 estimates the sequence of the unit operations from the feature vectors of the target work video, and checks a result of the estimation against the second models corresponding to the respective work elements to obtain a detection result 33. Note that descriptions regarding the detection result 31 as a correct answer and the detection result 32 based on the existing technique are similar to those of FIG. 2.

The detection result 33 includes the work element A, the work element B, the work element C, and the work element D in order from the top. Among the time-series unit operations included in the work element A in the detection result 33, a time from the first unit operation to the last unit operation is set as a section T4-1. Among the time-series unit operations included in the work element B, a time from the first unit operation to the last unit operation is set as a section T4-2. Among the time-series unit operations included in the work element C, a time from the first unit operation to the last unit operation is set as a section T4-3. Among the time-series unit operations included in the work element D, a time from the first unit operation to the last unit operation is set as a section T4-4.

When the detection result 33 is compared with the detection result 31 as a correct answer, the order of the work elements is the same, and the length of the section of each work element is almost the same. In other words, according to the information processing apparatus 100 according to the present embodiment, the accuracy in identifying the work of the person may be improved as compared with the existing technique.

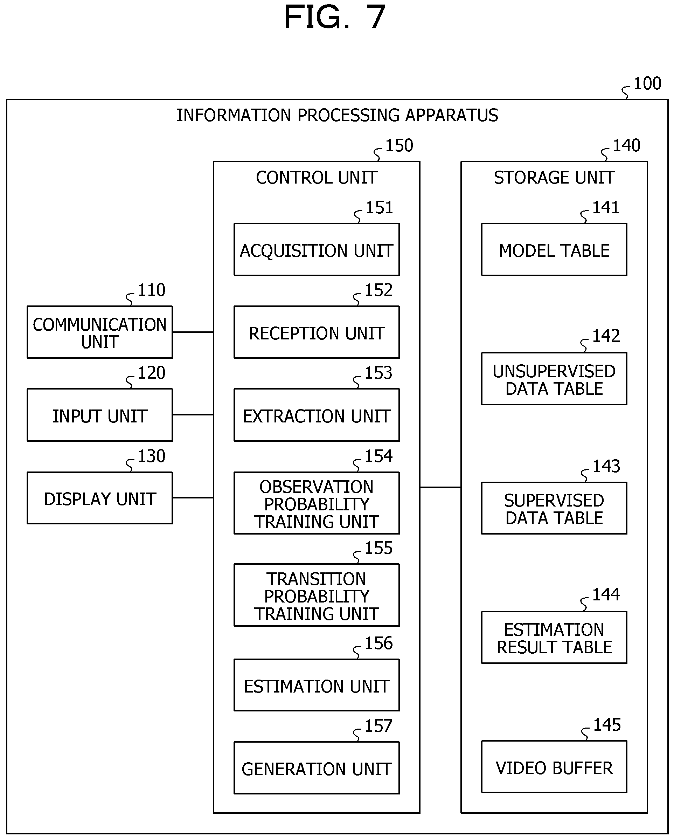

Next, an exemplary configuration of the information processing apparatus 100 that performs the processing described with reference to FIGs. 4 and 5 will be described. FIG. 7 is a functional block diagram illustrating a configuration of the information processing apparatus according to the present embodiment. As illustrated in FIG. 7, the information processing apparatus 100 includes a communication unit 110, an input unit 120, a display unit 130, a storage unit 140, and a control unit 150.

The communication unit 110 carries out data communication with the camera 15, an external device, and the like via the network 16. The control unit 150 to be described later exchanges data with an external device via the communication unit 110.

The input unit 120 is an input device that inputs various types of information to the control unit 150 of the information processing apparatus 100. The input unit 120 corresponds to a keyboard, a mouse, a touch panel, or the like.

The display unit 130 is a display device that displays information output from the control unit 150.

The storage unit 140 includes a model table 141, an unsupervised data table 142, a supervised data table 143, an estimation result table 144, and a video buffer 145. The storage unit 140 corresponds to a storage device such as a memory.

The model table 141 includes the first model 80 and the plurality of second models 90A and 90B described with reference to FIG. 4. The second model 90A is a model corresponding to the work element A. The second model 90B is a model corresponding to the work element B. The model table 141 may further include a second model corresponding to another work element.

The unsupervised data table 142 includes a plurality of pieces of unsupervised data. For example, the unsupervised data is assumed to be work video data divided at each predetermined time interval. The unsupervised data table 142 is used at a time of training the first model 80.

The supervised data table 143 is a table that retains a sequence of unit operations. A label for identifying a work element is assigned to each unit operation retained in the supervised data table 143. Furthermore, when an instruction regarding an unnecessary unit operation in the sequence of the unit operations included in the work element is received due to the improvement, the "waste label" is assigned as a label of the unnecessary unit operation. The supervised data table 143 is used at a time of training each second model.

The estimation result table 144 is a table that retains results of estimation by the estimation unit 156 to be described later.

The video buffer 145 is a buffer that stores work video data obtained from the camera 15.

The control unit 150 includes an acquisition unit 151, a reception unit 152, an extraction unit 153, an observation probability training unit 154, a transition probability training unit 155, an estimation unit 156, and a generation unit 157. Examples of the control unit 150 include a central processing unit (CPU), a graphics processing unit (GPU), and the like.

The acquisition unit 151 obtains work video data from the camera 15, and stores the obtained work video data in the video buffer 145.

Furthermore, the acquisition unit 151 may obtain data of the unsupervised data table 142 and data of the supervised data table 143 from an external device (not illustrated) or the like via the network 16. The acquisition unit 151 stores, in the storage unit 140, the obtained data of the unsupervised data table 142 and the obtained data of the supervised data table 143.

The reception unit 152 receives a label of a unit operation included in the work element from the input unit 120 or the like operated by an administrator or the like, and sets the received label to the corresponding unit operation. The received label is a label for identifying the work element or a waste label.

For example, the reception unit 152 displays, on the display unit 130, a display screen of each unit operation included in the supervised data table 143. The administrator who views the display unit 130 operates the input unit 120 to select a unit operation, and inputs a label of the selected unit operation. The reception unit 152 sets and updates the label corresponding to the unit operation in the supervised data table 143 based on the unit operation and the input label.

The extraction unit 153 extracts a feature vector based on the work video data. For example, in a "training phase", the extraction unit 153 extracts a feature vector based on the work video data stored in the unsupervised data table 142, and outputs the extracted feature vector to the observation probability training unit 154. In an "estimation phase", the extraction unit 153 extracts a feature vector based on the work video data stored in the video buffer 145, and outputs the extracted feature vector to the estimation unit 156.

Here, an exemplary process in which the extraction unit 153 extracts a feature vector from the work video data will be described. A human detection technique is applied to detect a region of a person (e.g., bounding box) from each frame included in the work video data, and the detected regions of the same person are tracked by associating them between the frames. When a plurality of human regions is detected from one frame, the extraction unit 153 specifies the region of the person to be determined based on the size of the region, the position of the region in the frame, and the like. The extraction unit 153 performs image processing on the image in the region of the person detected from each frame, and calculates posture information based on joint positions of the person, joint relationships thereof, and the like. The extraction unit 153 creates time-series posture information in which the posture information calculated for each frame is associated with time information associated with the frame and arrayed.

The extraction unit 153 calculates time-series motion information regarding each part of the body from the time-series posture information. The motion information may be, for example, a degree of bending of each part, a speed of bending, and the like. Each part may be, for example, an elbow, a knee, or the like. Furthermore, the extraction unit 153 extracts a feature vector having, as an element, a value obtained by averaging, using a sliding time window, the motion information in the window in the time direction at each regular time interval. For example, the extraction unit 153 may set a value in such a manner that each dimension of the feature vector corresponds to an averaged speed of bending, degree of bending, or the like of a predetermined part.

The observation probability training unit 154 trains the first model 80 based on the feature vector based on the work video data in the unsupervised data table 142, which is the feature vector extracted by the extraction unit 153. Examples of the first model 80 include a Gaussian mixture distribution (which will be referred to as a Gaussian mixture model (GMM) hereinafter) model and the like.

The observation probability training unit 154 calculates an observation probability of each unit operation using the Gaussian mixture model. Specifically, the observation probability training unit 154 clusters the feature vectors transferred from the extraction unit 153 to estimate parameters of the GMM in which the Gaussian distributions corresponding to the number of operations are mixed. Then, the observation probability training unit 154 assigns each Gaussian distribution included in the GMM for which the parameters are estimated as probability distribution representing the observation probability of each operation.

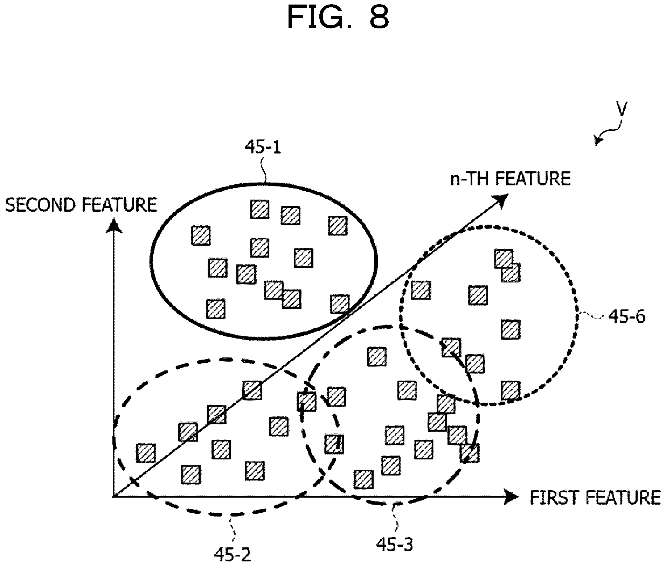

FIG. 8 is a diagram for explaining processing of the observation probability training unit. In the example illustrated in FIG. 8, a feature space V is represented by axes of a first feature, a second feature, and an n-th feature. The first feature, the second feature, and the n-th feature correspond to individual dimensions of a feature vector. For example, a position of each feature vector in the feature space V is indicated by a square mark in FIG. 8.

When being clustered by the observation probability training unit 154, the individual feature vectors are classified into clusters 45-1, 45-2, 45-3, and 45-6. For example, each of the feature vectors classified into the cluster 45-1 is a feature vector corresponding to the unit operation "m₁". Each of the feature vectors classified into the cluster 45-2 is a feature vector corresponding to the unit operation "m₂". Each of the feature vectors classified into the cluster 45-3 is a feature vector corresponding to the unit operation "m₃". Each of the feature vectors classified into the cluster 45-6 is a feature vector corresponding to the unit operation "m₆".

The clustering result illustrated in FIG. 8 corresponds to the result of the training of the first model 80. When a feature vector to be estimated is input to the trained first model 80, an observation probability of each unit operation is output from the first model 80 based on a distance between the feature vector to be estimated and each cluster. For example, when a distance from the feature vector to be estimated to the cluster 45-1 is shorter than distances to other clusters, the observation probability of the unit operation "m₁" is a probability larger than the observation probability of other unit operations with respect to the feature vector to be estimated.

The description returns to FIG. 7. The transition probability training unit 155 trains the transition probability of the second model corresponding to each work element based on the supervised data table 143. The transition probability training unit 155 trains the transition probability of the edge between the state nodes of the unit operation using the maximum likelihood estimation, the expectation-maximization (EM) algorithm, or the like.

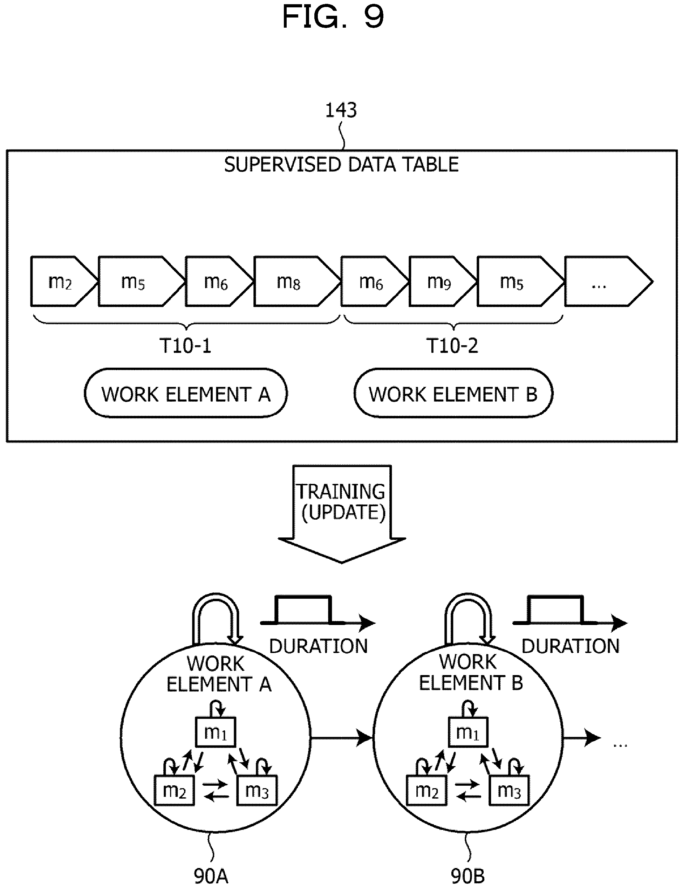

Exemplary processing of the transition probability training unit 155 will be described with reference to FIG. 9. FIG. 9 is a diagram for explaining exemplary processing of the transition probability training unit. For example, it is assumed that, in the supervised data table 143, the label of the work element A is assigned to the time-series unit operations m₂, m₅, m₆, and m₈ included in the section T10-1. In this case, the transition probability training unit 155 trains the transition probability of the edge between the state nodes of the second model 90A using the sequence of the unit operations m₂, m₅, m₆, and m₈.

Furthermore, it is assumed that, in the supervised data table 143, the label of the work element B is assigned to the time-series unit operations m₆, m₉, and m₅ included in the section T10-2. In this case, the transition probability training unit 155 trains the transition probability of the edge between the state nodes of the second model 90B using the sequence of the unit operations m₆, m₉, and m₅.

The transition probability training unit 155 trains the transition probability of the second model corresponding to each work element by repeatedly performing the processing described above based on the relationship between the label and the sequence of the unit operations registered in the supervised data table 143. Note that the order of the individual work elements is specified in advance, and each second model is coupled based on the specified information. When the order of the work elements is the order of the work elements A, B, C, and D, each second model is coupled in the order of the second model corresponding to the work element A, the second model corresponding to the work element B, the second model corresponding to the work element C, and the second model corresponding to the work element D.

Furthermore, the transition probability training unit 155 specifies a duration of each work element based on a section of unit operations to which a label of the same work element is continuously set among the plurality of unit operations registered in the supervised data table 143. The transition probability training unit 155 specifies probability distribution of the duration based on the specified duration of each work element, and sets the specified probability distribution in the second model of each work element.

Here, when the label of the unit operation set in the supervised data table 143 is changed by the administrator who operates the input unit 120, the transition probability training unit 155 updates the transition probability of the second model of the relevant work element. Information regarding the label change history is retained in the supervised data table 143.

The processing in which the transition probability training unit 155 updates the transition probability of the second model will be described with reference to FIG. 5. For example, it is assumed that the label of the "work element A" is set to the sequence of the unit operations "m₂, m₅, m₆, and m₈" registered in the supervised data table 143. When it is found that, in the sequence of the unit operations "m₂, m₅, m₆, and m₈", the unit operations "m₅" and "m₆" are unnecessary unit operations according to the improvement, the administrator operates the input unit 120 to set a label of such unit operations "m₅" and "m₆" to a "waste label". For example, the transition probability training unit 155 scans the time-series unit operations, and specifies the label to which the waste label is set.

The transition probability training unit 155 performs the following process when the label of the unit operations "m₅" and "m₆" is set to the "waste label" in the sequence of the unit operations "m₂, m₅, m₆, and m₈" set to the label of the "work element A". The transition probability training unit 155 reduces the transition probability of the edge from the state node of the unit operation m₂ to the state node of the unit operation m₅ and the transition probability of the edge from the state node of the unit operation m₅ to the state node of the unit operation m₆ among the edges of the respective state nodes of the second model 90A corresponding to the work element A. Furthermore, the transition probability training unit 155 reduces the transition probability of the edge from the state node of the unit operation m₆ to the state node of the unit operation m₈.

Note that the transition probability training unit 155 may retrain the transition probability set to each edge of the second model 90A using the sequence of the unit operations "m₂ and m₈" obtained by removing the unit operations "m₅ and m₆" from the sequence of the unit operations "m₂, m₅, m₆, and m₈" corresponding to the work element A. At this time, the transition probability training unit 155 carries out the retraining using the maximum likelihood estimation or the EM algorithm.

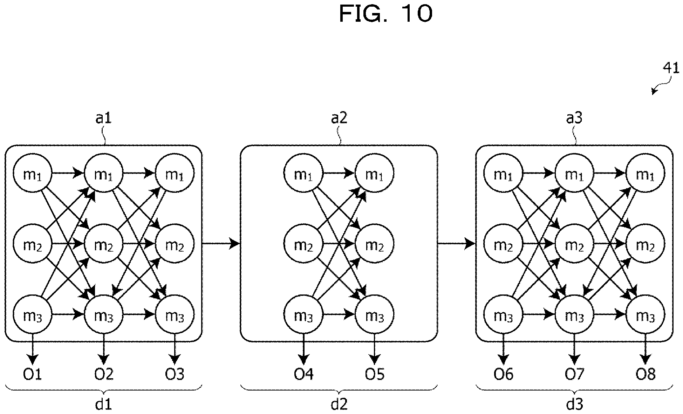

Meanwhile, the transition probability training unit 155 may construct a machine learning model illustrated in FIG. 10 based on the observation probability of each unit operation calculated by the observation probability training unit 154, the transition probability of the edge between the unit operations (state nodes), and the probability distribution of the duration set for each work element. The machine learning model corresponds to the first model and the second model described above.

FIG. 10 is a diagram illustrating an example of the machine learning model. A machine learning model 41 illustrated in FIG. 10 is a hidden semi-Markov model (HSMM) in which a second model corresponding to each action element transitions in order of individual action elements after the set duration. In FIG. 10, O1, O2,..., and O8 represent observation probabilities calculated by the observation probability training unit 154. In addition, transition probabilities associated with arrows between the operations m1, m2, and m3 included in each of the action elements a1, a2, and a3 correspond to the transition probabilities calculated by the transition probability training unit 155. Furthermore, d1, d2, and d3 represent the duration of each action element.

The description returns to FIG. 7. In the estimation phase, the estimation unit 156 estimates a work element of a worker in each section. The estimation unit 156 obtains time-series feature vectors from the extraction unit 153. Such a feature vector is a feature vector extracted from the work video data of the video buffer 145.

The estimation unit 156 inputs the time-series feature vectors to the first model 80, thereby estimating the sequence of the time-series unit operations. The estimation unit 156 checks the estimated sequence of the unit operations against the respective second models 90A and 90B (second model of other work elements), causes the state node to transition, and sequentially specifies the work element corresponding to the sequence of the unit operations based on the transition probability of the edge that has actually transitioned, various constraints, and the like. The various constraints include a work time constraint, a work order constraint, and the like. The estimation unit 156 causes the display unit 130 to display a result of the estimation of the work element.

The estimation unit 156 registers, in the estimation result table 144, the result of the estimation of the work element and the sequence of the unit operations included in the work element. The estimation unit 156 assigns a label for identifying the work element to each unit operation. The transition probability training unit 155 may retrain the second model based on the information registered in the estimation result table 144. The administrator may operate the input unit 120 to refer to the information in the estimation result table 144 and to change the label set to each unit operation in the estimation result table 144.

The generation unit 157 performs the following process to generate information to be registered in the supervised data table 143. Here, a case will be described in which the generation unit 157 generates the information to be registered in the supervised data table 143 from the work video data registered in the unsupervised data table 142 in cooperation with the reception unit 152 and the extraction unit 153.

The extraction unit 153 extracts a feature vector based on the work video data stored in the unsupervised data table 142, and outputs the extracted feature vector to the generation unit 157. The generation unit 157 inputs the time-series feature vectors to the first model 80, thereby estimating the sequence of the time-series unit operations. The reception unit 152 receives, from the administrator who operates the input unit 120, a label of the work element for each of the time-series sections regarding the work video data stored in the unsupervised data table 142, and outputs the received information regarding the section and label to the generation unit 157.

The generation unit 157 sets a label of the work element for each unit operation based on the sequence of the time-series unit operations and the label of the work element for each section. The generation unit 157 registers, in the supervised data table 143, the information regarding the time-series unit operations to which the label has been set.

While the case has been described in which the generation unit 157 generates the information regarding the unit operations to which the label is set based on the work video data registered in the unsupervised data table 142, it is not limited to this. The generation unit 157 may generate the information regarding the unit operations to which the label is set based on the work video data transmitted from the camera 15, and may register it in the supervised data table 143.

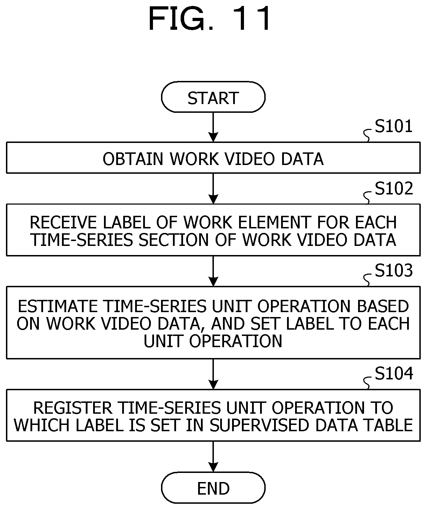

Next, an exemplary processing procedure of the information processing apparatus according to the present embodiment will be described. FIGs. 11 to 13 are flowcharts illustrating a processing procedure of the information processing apparatus according to the present embodiment. First, FIG. 11 will be described. As illustrated in FIG. 11, the acquisition unit 151 of the information processing apparatus 100 obtains work video data (step S101).

The reception unit 152 of the information processing apparatus 100 receives a label of a work element for each of time-series sections of the work video data (step S102). The generation unit 157 of the information processing apparatus 100 estimates time-series unit operations based on the work video data (step S103).

The generation unit 157 registers, in the supervised data table 143, the time-series unit operations to which the label is set (step S104).

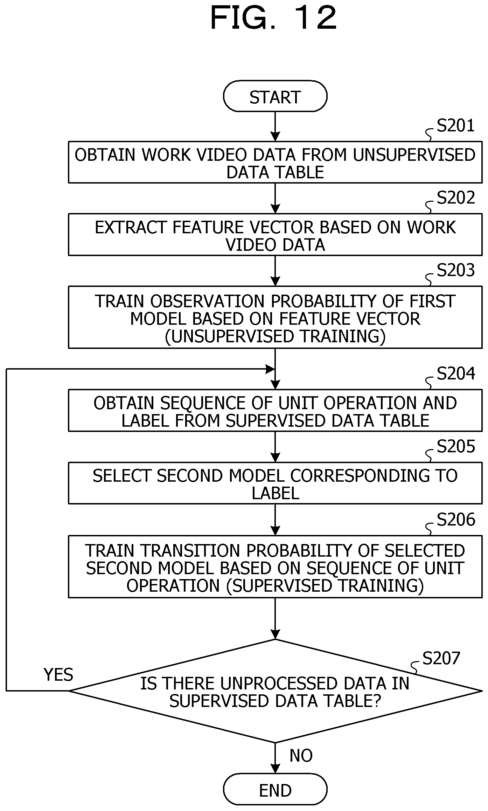

Next, FIG. 12 will be described. The extraction unit 153 of the information processing apparatus 100 obtains work video data from the unsupervised data table 142 (step S201). The extraction unit 153 extracts a feature vector based on the work video data (step S202).

The observation probability training unit 154 of the information processing apparatus 100 trains (performs unsupervised training of) an observation probability of the first model 80 based on the feature vector extracted by the extraction unit 153 (step S203).

The transition probability training unit 155 of the information processing apparatus 100 obtains a sequence of unit operations and a label from the supervised data table 143 (step S204). The transition probability training unit 155 selects the second model corresponding to the label (step S205). The transition probability training unit 155 trains (supervised training) a transition probability of the second model based on the sequence of the unit operations (step S206).

When there is unprocessed data in the supervised data table 143 (Yes in step S207), the transition probability training unit 155 proceeds to step S204. On the other hand, when there is no unprocessed data in the supervised data table 143 (No in step S207), the transition probability training unit 155 terminates the process.

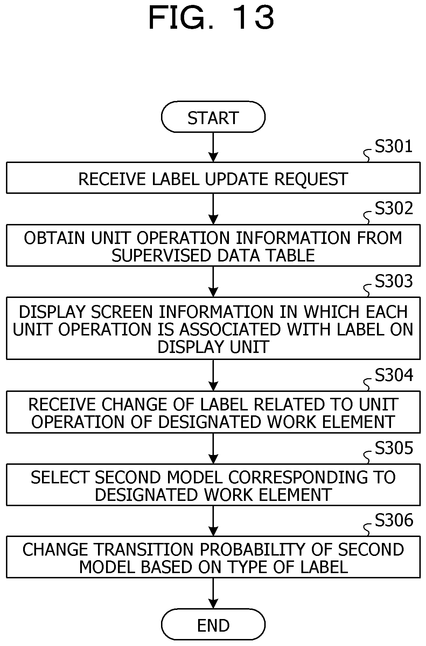

Next, FIG. 13 will be described. The transition probability training unit 155 of the information processing apparatus 100 receives a label update request (step S301). The transition probability training unit 155 obtains information regarding unit operations from the supervised data table 143 (step S302).

The transition probability training unit 155 causes the display unit 130 to display screen information in which each unit operation is associated with a label (step S303). The transition probability training unit 155 receives a change of the label related to the unit operation of the designated work element (step S304).

The transition probability training unit 155 selects the second model corresponding to the designated work element (step S305). The transition probability training unit 155 changes the transition probability of the second model based on a type of the label (step S306).

Next, effects of the information processing apparatus 100 according to the present embodiment will be described. The information processing apparatus 100 may improve the accuracy in identifying the work element of the person by, when an unnecessary unit operation is designated in the sequence of the unit operations corresponding to the work element, updating the transition probability of the second model of the corresponding work element.

For example, as described with reference to FIG. 6, the detection result by the information processing apparatus 100 is the detection result 33. When the detection result 33 is compared with the detection result 31 as a correct answer, the order of the work elements is the same, and the length of the section of each work element is almost the same. In other words, according to the information processing apparatus 100 according to the present embodiment, the accuracy in identifying the work of the person may be improved as compared with the existing technique.

The information processing apparatus 100 calculates a feature vector based on the work video data, and inputs the feature vector to the first model 80 generated by unsupervised training, thereby specifying a unit operation. As a result, each unit operation included in the work of variation may be appropriately classified.

When an unnecessary unit operation is designated, the information processing apparatus 100 updates the transition probability between the state nodes of the second model of the relevant work element. As a result, the accuracy in identifying the work element of the person may be improved.

The information processing apparatus 100 specifies a unit operation to which a waste label is assigned among the plurality of unit operations, and updates the transition probability corresponding to the unit operation to which the waste label is assigned among the plurality of edges coupling the plurality of unit operations included in the second model. As a result, the transition probability of the second model may be efficiently updated.

The information processing apparatus 100 trains the transition probability of the edge coupling the plurality of unit operations included in the second model based on, among the plurality of unit operations, the plurality of time-series unit operations excluding the unit operation to which the waste label is assigned. As a result, the second model may be retrained using appropriate supervised data, and the accuracy of the second model may be improved.

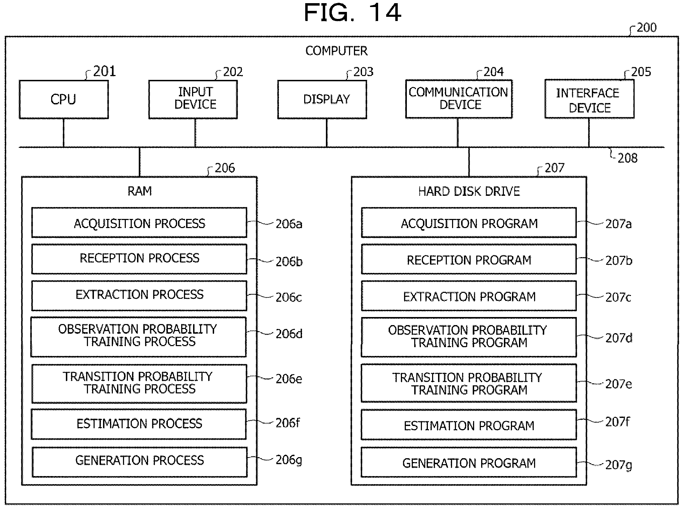

Next, an exemplary hardware configuration of a computer that implements functions similar to those of the information processing apparatus 100 described above will be described. FIG. 14 is a diagram illustrating an exemplary hardware configuration of the computer that implements functions similar to those of the information processing apparatus according to the embodiment.

As illustrated in FIG. 14, a computer 200 includes a CPU 201 that executes various types of arithmetic processing, an input device 202 that receives data input made by a user, and a display 203. In addition, the computer 200 includes a communication device 204 that exchanges data with the camera 15, an external device, and the like via a wired or wireless network, and an interface device 205. Furthermore, the computer 200 includes a random access memory (RAM) 206 that temporarily stores various types of information, and a hard disk drive 207. Additionally, each of the devices 201 to 207 is coupled to a bus 208.

The hard disk drive 207 has an acquisition program 207a, a reception program 207b, an extraction program 207c, an observation probability training program 207d, a transition probability training program 207e, an estimation program 207f, and a generation program 207g. Furthermore, the CPU 201 reads each of the programs 207a to 207g, and loads it into the RAM 206.

The acquisition program 207a functions as an acquisition process 206a. The reception program 207b functions as a reception process 206b. The extraction program 207c functions as an extraction process 206c. The observation probability training program 207d functions as an observation probability training process 206d. The transition probability training program 207e functions as a transition probability training process 206e. The estimation program 207f functions as an estimation process 206f. The generation program 207g functions as a generation process 206g.

Processing of the acquisition process 206a corresponds to the processing of the acquisition unit 151. Processing of the reception process 206b corresponds to the processing of the reception unit 152. Processing of the extraction process 206c corresponds to the processing of the extraction unit 153. Processing of the observation probability training process 206d corresponds to the processing of the observation probability training unit 154. Processing of the transition probability training process 206e corresponds to the processing of the transition probability training unit 155. Processing of the estimation process 206f corresponds to the processing of the estimation unit 156. Processing of the generation process 206g corresponds to the processing of the generation unit 157.

Note that each of the programs 207a to 207g may not necessarily be stored in the hard disk drive 207 from the beginning. For example, each of the programs may be stored in a "portable physical medium" to be inserted in the computer 200, such as a flexible disk (FD), a compact disc read only memory (CD-ROM), a digital versatile disc (DVD), a magneto-optical disk, an integrated circuit (IC) card, or the like. Then, the computer 200 may read and execute each of the programs 207a to 207g.

## Claims

1. A machine learning program causes a computer to execute a process comprising:
obtaining video in which work of a person is captured;
receive a label that indicates a work element of the person for each time-series section of the obtained video; and
executing training processing that trains a transition probability of a feature per unit time included in the work element based on the received label, wherein
the training processing changes, when the label of a specific type is assigned to the entire or a part of the work element, the transition probability of the feature in the section that corresponds to the label based on the type of the assigned label.

2. The machine learning program according to claim 1, further comprising:
calculating a feature vector based on the video to specify a unit operation per unit time based on the calculated feature vector, and the training processing trains the transition probability of an edge that couples a plurality of the unit operations included in a model that corresponds to the work element.

3. The machine learning program according to claim 2, wherein
the training processing specifies the unit operation to which the label of the specific type is assigned among the plurality of time-series unit operations that corresponds to the work element, and updates the transition probability that corresponds to the unit operation to which the label of the specific type is assigned among a plurality of the edges that couples the plurality of unit operations included in the model.

4. The machine learning program according to claim 2, wherein
the training processing trains the transition probability of the edge that couples the plurality of unit operations included in the model based on the plurality of time-series unit operations in which the unit operation to which the label of the specific type is assigned is excluded from the plurality of time-series unit operations that corresponds to the work element.

5. A machine learning method implemented by a computer, the machine learning method comprising:
obtaining video in which work of a person is captured;
receive a label that indicates a work element of the person for each time-series section of the obtained video; and
executing training processing that trains a transition probability of a feature per unit time included in the work element based on the received label, wherein
the training processing changes, when the label of a specific type is assigned to the entire or a part of the work element, the transition probability of the feature in the section that corresponds to the label based on the type of the assigned label.

6. The machine learning method according to claim 5, further comprising:
calculating a feature vector based on the video to specify a unit operation per unit time based on the calculated feature vector, and the training processing trains the transition probability of an edge that couples a plurality of the unit operations included in a model that corresponds to the work element.

7. The machine learning method according to claim 6, wherein
the training processing specifies the unit operation to which the label of the specific type is assigned among the plurality of time-series unit operations that corresponds to the work element, and updates the transition probability that corresponds to the unit operation to which the label of the specific type is assigned among a plurality of the edges that couples the plurality of unit operations included in the model.

8. The machine learning method according to claim 6, wherein
the training processing trains the transition probability of the edge that couples the plurality of unit operations included in the model based on the plurality of time-series unit operations in which the unit operation to which the label of the specific type is assigned is excluded from the plurality of time-series unit operations that corresponds to the work element.

9. An information processing apparatus comprising:
a control unit configured to:
obtain video in which work of a person is captured;
receive a label that indicates a work element of the person for each time-series section of the obtained video; and
execute training processing that trains a transition probability of a feature per unit time included in the work element based on the received label, wherein
the training processing changes, when the label of a specific type is assigned to the entire or a part of the work element, the transition probability of the feature in the section that corresponds to the label based on the type of the assigned label.

10. The information processing apparatus according to claim 9, wherein the control unit is further configured to calculate a feature vector based on the video to specify a unit operation per unit time based on the calculated feature vector, and the training processing trains the transition probability of an edge that couples a plurality of the unit operations included in a model that corresponds to the work element.

11. The information processing apparatus according to claim 10, wherein the training processing specifies the unit operation to which the label of the specific type is assigned among the plurality of time-series unit operations that corresponds to the work element, and updates the transition probability that corresponds to the unit operation to which the label of the specific type is assigned among a plurality of the edges that couples the plurality of unit operations included in the model.

12. The information processing apparatus according to claim 10, wherein the training processing trains the transition probability of the edge that couples the plurality of unit operations included in the model based on the plurality of time-series unit operations in which the unit operation to which the label of the specific type is assigned is excluded from the plurality of time-series unit operations that corresponds to the work element.
